# EUROPÄISCHE PATENTSCHRIFT

(11) **EP 4 101 792 B1**
(45) Veröffentlichungstag und Bekanntmachung des Hinweises auf die Patenterteilung: **27.03.2024**
(21) Anmeldenummer: 21178614.0
(22) Anmeldetag: 09.06.2021
(51) Int. Cl.: F16G 13/20, B65G 17/42, F16G 13/06

(54) **FÖRDERKETTE FÜR EINEN FÖRDERER**
CONVEYOR CHAIN FOR A CONVEYOR
CHAÎNE TRANSPORTEUSE POUR UN TRANSPORTEUR

(43) Veröffentlichungstag der Anmeldung: 14.12.2022
(73) Patentinhaber: BEUMER Group GmbH & Co. KG, 59269 Beckum (DE)
(72) Erfinder: Weyhofen, Claus, 47495 Rheinberg (DE)
(74) Vertreter: Angerhausen, Christoph

(56) Entgegenhaltungen:
- EP-A1- 0 936 378
- DE-A1- 19 644 373
- DE-A1-102018 124 850
- DE-U1-202012 104 764
- US-A- 1 546 316

## Beschreibung

Die Erfindung geht aus von einer Förderkette für einen Förderer, mit einer Mehrzahl Kettenglieder, wobei benachbarte Kettenglieder jeweils über eine Bolzen-Buchse-Verbindung drehgelenkig miteinander verbunden sind, wobei die Kettenglieder entlang einer Haupterstreckungsrichtung der Förderkette in abwechselnder Abfolge Innenlaschen und Außenlaschen aufweisen, wobei zumindest einige der Innenlaschen Winkelhalter zum Tragen von Anschlusselementen wie Stahlzellen aufweisen, wobei zwischen zumindest zwei benachbarten Kettengliedern der Buchsenförderkette in Eingriff bringbare Mittel vorgesehen sind, welche zur Begrenzung des Schwenkwinkels benachbarter Kettenglieder entgegen der Umlaufrichtung der Buchsenförderkette ausgebildet sind, wobei die Winkelhalter auf Außenflächen der Innenlaschen befestigt sind und jeweils zumindest ein erstes der in Eingriff bringbaren Mittel aufweisen.

Eine derartige Förderkette ist bekannt aus der Druckschrift US 1,546,316. Aus der Druckschrift WO 2020/074371 A1 ist eine Laschenkette für einen Förderer bekannt, welche mehrere drehbar miteinander verbundene Kettenglieder aufweist, wobei einige benachbarte Kettenglieder einen Anschlag und einen Gegenanschlag zur Begrenzung des Schwenkwinkels der benachbarten Kettenglieder entgegen einer Umlaufrichtung aufweisen.

Die aus dem Stand der Technik bekannte Lösung weist jedoch den Nachteil auf, dass zur Herstellung der Kette die Laschen gebogen werden, was viel Verschnitt mit sich bringt. Ferner wird die Rückensteifigkeit zur Vermeidung der Durchbiegung der Kette dadurch erzielt, dass einige der Laschen ausgepresste Nocken aufweisen, auf welchen formverlängerte Nasen benachbarter Laschen aufliegen. Das Auspressen der Nocken ist jedoch kostenintensiv, da dieser Vorgang unter anderem durch Hinzugabe von Wärme durchgeführt werden muss, außerdem weist die Kette dadurch ein hohes Eigengewicht auf.

Es ist daher die Aufgabe der Erfindung, eine Kette für einen Stahlzellenförderer derart zu verbessern, dass diese eine zuverlässige Rückensteifigkeit ermöglicht und besonders einfach herstellbar ist.

Diese Aufgabe wird durch eine Förderkette, insbesondere eine Buchsenförderkette, für einen Förderer, insbesondere einen Stahlzellenförderer, mit den Merkmalen des Anspruchs 1 gelöst. Die Kette kann alternativ auch für Plattenbandförderer, Kastenzellenförderer, Becherzellenbänder, Flachplattenförderer oder Buckelplattenbänder eingesetzt werden. Die abhängigen Ansprüche betreffen jeweils vorteilhafte Ausführungsformen der Erfindung.

Demgemäß ist vorgesehen, dass die Außenlaschen jeweils zumindest ein zweites der in Eingriff bringbaren Mittel aufweisen, wobei das zweite in Eingriff bringbare Mittel ein an der Außenlasche ausgebildeter Gegenanschlag ist.

Durch die erfindungsgemäße Lösung können die einzelnen Laschen der Kette kürzer gefertigt werden, wodurch die Kette als ganzes ein geringeres Eigengweicht aufweist. Ferner entfällt das kostenintensive Herausdrücken der Nocken unter Hinzugabe von Wärme vollständig.

Bei der Bolzen-Buchse-Verbindung kann vorgesehen sein, dass die Kettenglieder mit den Innenlaschen integral mit den Buchsen ausgeführt sind, wobei die Buchsen die gegenüberliegenden Innenlaschen des Kettenglieds verbinden und voneinander beabstanden. Die Außenlaschen können jeweils separat ausgeführt sein und jeweils durch in die Buchsen eingesteckte Bolzen mit dem die Innenlaschen aufweisenden Kettenglied verbunden sein. Es kann vorgesehen sein, dass die Bolzen von der Außenseite der Laschen durch diese und durch die entsprechende Buchse durchgesteckt sind und auf der gegenüberliegenden Kettenseite durch einen quer zum Bolzen verlaufenden Stift gesichert sind.

Die Kettenglieder sind derart drehgelenkig miteinander verbunden, dass ein Verschwenken der Kettenglieder innerhalb der Ebene, in welcher die Kette entlang ihrer Haupterstreckungsrichtung liegt, ermöglicht ist.

Die Haupterstreckungsrichtung der Kette ist dadurch definiert, dass entlang dieser die Kettenglieder nachfolgend miteinander verbunden sind.

Die Anordnung von Innenlaschen und Außenlasche in abwechselnder Abfolge entlang der Haupterstreckungsrichtung impliziert, dass in alternierender Weise Kettenglieder mit Innenlaschen und Kettenglieder mit Außenlaschen aneinandergereiht sind. Dabei ist vorgesehen, dass die Außenlaschen die benachbarten Innenlaschen jeweils von ihrer Außenseite umgreifen, so dass die Außenlaschen weiter voneinander beabstandet sind als die Innenlaschen voneinander. Die Außenlaschen und die Innenlaschen weisen im Überlappungsbereich fluchtende Bohrungen auf, so dass ein Befestigungsbolzen von der Außenseite der Außenlaschen her durch die fluchtenden Bohrungen gesteckt werden kann.

Die Winkelhalter können sich insbesondere senkrecht zur Hauptausbreitungsrichtung bis über eine Oberseite der Ketten erstrecken. Die Winkelhalter können Aufnahmemittel zum Befestigen von Anschlussvorrichtungen wie Becher oder Zellen aufweisen. Die Winkelhalter sind als separate, von den Laschen der Kette unabhängige Elemente, welche mit den Laschen verschraubt, vernietet, verklebt, verschweißt oder kalt verpresst sein können. Die Winkelhalter können einseitig oder auf beiden Seiten der Kette angeordnet sein. Die Auflageabschnitte der Winkelhalter können insbesondere zur Außenseite der Kette hin abgekantet sein.

Insbesondere können die in Eingriff bringbaren Mittel als Nase-Sicke-Kombinationen ausgeführt sein, wobei jeweils eines der Mittel an einem der benachbarten Kettenglieder und das andere der Mittel am anderen der benachbarten Kettenglieder vorgesehen sein kann. Die in Eingriff bringbaren Mittel können insbesondere miteiander korrespondierende Flächenabschnitte aufweisen, welche bei Erreichen einer vorbestimmten Schwenkendposition beider Kettenglieder zueinander in Anlage gebacht sind und dadurch ein weiteres Verschwenken der Kettenlieder verhindern.

Die Flächenabschnitte können insbeosondere dazu vorgesehen sein, eine Begrenzung des Schwenkwinkels benachbarter Kettenglieder entgegen der Umlaufrichtung zu bewirken. Dadurch kann ein Durchhängen der Kette in Abschnitten, in welchen die Kette einen Geradeauslauf aufweist, unterbunden werden, so dass die durch die Auflageabschnitte der Winkelhalter aufgespannte Fläche nicht konkav ist.

Es kann vorgesehen sein, dass die Winkelhalter einen parallel zur Außenfläche der Lasche verlaufenden Befestigungsabschnitt sowie einen vom Befestigungsabschnitt abgekanteten Auflageabschnitt für die Montage von Stahlzellen aufweisen, wobei das erste in Eingriff bringbare Mittel ein am Befestigungsabschnitt ausgebildeter oder befestigter Anschlag ist.

Der Befestigungsabschnitt kann flächig ausgebildet sein und flächig mit der jeweiligen Lasche in Kontakt stehen. Der Befestigungsabschnitt kann Befestigungsaufnahmen aufweisen, welche mit entsprechenden Befestigungsaufnahmen der mit dem Befestigungsabschnitt in Verbindung stehenden Lasche fluchten. Der Auflageabschnitt kann ebenfalls flächig ausgebildet sein und senkrecht zum Befestigungsabschnitt angeordnet sein. Der Winkelhalter kann einstückig ausgebildet sein, so dass Auflageabschnitt und Befestigungsabschnitt aus einem zusammenhängenden Metallstreifen bestehen können, welcher entsprechen umgekantet ist. Es ist alternativ auch denkbar, dass die Winkelhalter aus mehreren Teilen bestehen und miteinander verschweißt sind.

Es kann ferner vorgesehen sein, dass der Anschlag ein am Befestigungsabschnitt des Winkelhalters ausgebildeter Vorsprung oder eine im Befestigungsabschnitt des Winkelhalters ausgebildete Aussparung ist. Der Vorsprung oder die Aussparung sind dabei jeweils so ausgebildet, dass ein passend dazu geformter Gegenanschlag der benachbarten Außenlasche ungehindert in Anlage mit dem als Vorsprung oder Aussparung ausgebildeten Anschlag ein- und ausschwenken kann.

Bei der Ausführungsform des Anschlags als Vorsprung kann vorgesehen sein, dass der Befestigungsabschnitt T-förmig ausgebildet ist und zwei sich gegenüberliegende, vom Befestigungsabschnitt wegestreckende Vorsprünge als Anschläge aufweist. Dadurch dient der Winkelhalter für beide Gegenanschläge der an die Innenlasche angrenzenden Außenlaschen als Anschlag. Die Vorsprünge können sich dabei im Wesentlichen in Haupterstreckungsrichtung der Kette vom Befestigungsabschnitt wegerstrecken.

Es kann vorgesehen sein, dass die Winkelhalter kraftschlüssig mit den Laschen verbunden sind. Es kann jedoch auch vorgesehen sein, dass stoffschlüssige Verbindungsverfahren zum Befestigen der Winkelhalter an den Laschen verwendet werden. Der Vorteil besteht insbesondere darin, auf kostenintensive Umformverfahren zu verzichten und die Winkelhalter inklusiver der Anschläge als von den Laschen separate Bauteile bereitzustellen.

Dabei können die Winkelhalter jeweils mittels zumindest zwei voneinander beabstandeten Schraubverbindungen an den Laschen befestigt sein. Die Beabstandung der Schraubverbindungen weist den Vorteil auf, dass das durch die aufliegenden Gegenanschläge auf den Winkelhalter ausgeübte Moment reduziert wird. Insbesondere kann vorgesehen sein, dass die Fixierpunkte der Winkelhalter an den Laschen in Haupterstreckungsrichtung voneinander beabstandet sind.

Dabei kann vorgesehen sein, dass die Winkelhalter mittels einer Verbindung aus einer Schraube, insbesondere einer Zylinderkopfschraube, und einer Konusmutter sowie insbesondere einer zwischen Schraube und Mutter angeordneten Keilsicherungsscheibe an den Laschen befestigt sind.

Der Gegenanschlag kann dabei als eine sich insbesondere in der Haupterstreckungsrichtung der Buchsenförderkette erstreckende Rastkante ausgebildet sein. Wie auch die Winkelhalter können zudem die Außenlaschen jeweils zwei in Haupterstreckungsrichtung gegenüberliegende endseitig ausgebildete Rastkanten aufweisen. Dadurch kann der Effekt des Einschränkens des Schwenkwinkels entgegen der Umlaufrichtung der Kette auf eine beliebige Anzahl aufeinanderfolgender Kettenglieder ausgedehnt werden.

Somit kann vorgesehen sein, dass eine Mehrzahl aufeinanderfolgender Kettenglieder der Buchsenförderkette zwischen den einzelnen Kettengliedern jeweils in Eingriff bringbare Mittel aufweist, wobei die in Eingriff bringbaren Mittel die Schwenkwinkel zwischen den einzelnen Kettengliedern entgegen der Umlaufrichtung der Buchsenförderkette so begrenzen, dass die Winkelhalter der Mehrzahl aufeinanderfolgender Kettenglieder bei in Eingriff gebrachten Mitteln eine plane Oberfläche bereitstellen.

Ferner kann vorgesehen sein, dass die Buchsenförderkette über ihren Verlauf regelmäßig voneinander beabstandete Laufrollen zur Führung der Buchsenförderkette an einer Führung eines Stahlzellenförderers aufweist, wobei die Abstände jeweils eine Mehrzahl aufeinanderfolgender Kettenglieder überspannen, wobei die an die Laufrollen angrenzenden Kettengliedverbindungen jeweils keine in Eingriff bringbaren Mittel aufweisen. Der Vorteil, dass im Bereich der Laufrollen keine Anschläge bzw. Gegenanschläge vorgesehen sind, besteht darin, dass es der Buchsenförderkette dadurch ermöglicht ist, Kurven zu durchlaufen.

Weiterhin kann vorgesehen sein, dass zumindest einige der Außenlaschen Winkelhalter zum Tragen von Stahlzellen aufweisen, wobei die Auflageabschnitte der Innenlaschen und die Auflageabschnitte der Außenlaschen jeweils Befestigungsaufnahmen zum Befestigen von Stahlzellen aufweisen, wobei die Befestigungsaufnahmen der Winkelhalter der Außenlaschen und die Befestigungsaufnahmen der Winkelhalter der Innenlaschen so zueinander ausgerichtet sind, dass sie in der Haupterstreckungsrichtung der Buchsenförderkette miteinander fluchten. Ferner kann vorgesehen sein, dass die Auflageabschnitte der Winkelhalter an den Innenlaschen eine größere Breite aufweisen als die Auflageabschnitte der Winkelhalter an den Außenlaschen, so dass auch die Außenkanten der Auflagenabschnitte der Innenlaschen und der Außenlaschen in Haupterstreckungsrichtung der Kette miteinander fluchten.

Dabei kann vorgesehen sein, dass die Winkelhalter der Außenlaschen einen parallel zur Außenfläche der Lasche verlaufenden Befestigungsabschnitt sowie einen vom Befestigungsabschnitt abgekanteten Auflageabschnitt für die Montage von Stahlzellen aufweisen, wobei die Winkelhalter kraftschlüssig an den Außenlaschen befestigt sind.

Beispielhafte Ausführungsformen der Erfindung werden anhand der nachfolgenden Figuren erläutert. Dabei zeigt:
- Fig.1: eine Seitenansicht einer Ausführungsform zweier verbundener Kettenglieder mit Innenlaschen und Außenlaschen für eine Buchsenförderkette;
- Fig. 2: eine Draufsicht einer Ausführungsform zweier verbundener Kettenglieder mit Innenlaschen und Außenlaschen für eine Buchsenförderkette;
- Fig. 3: eine Schnittansicht einer Ausführungsform einer Anbindung eines Winkelhalters an eine Innenlasche.

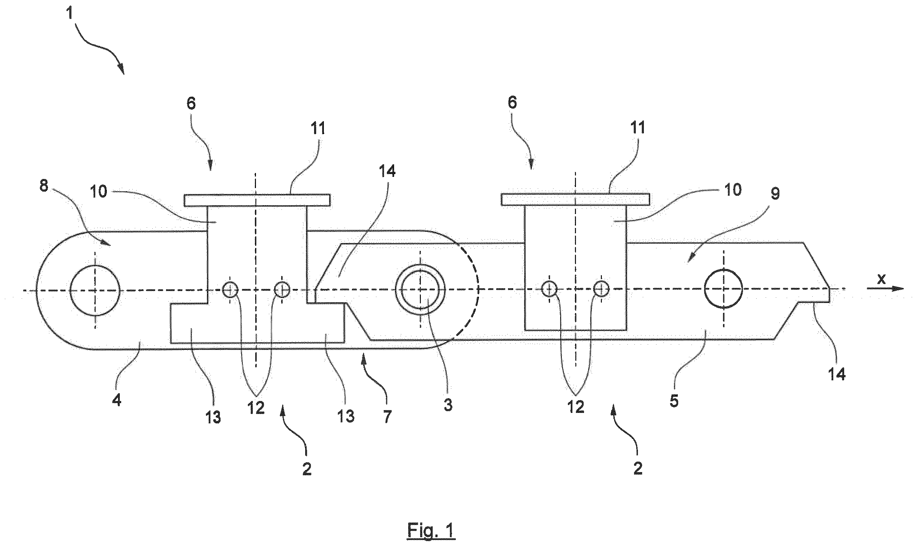

Die in Figur 1 dargestellten Kettenglieder 2 sind entlang einer Haupterstreckungsrichtung X der Buchsenförderkette 1 drehgelenkig miteinander verbunden, wobei die Verbindung beider benachbarter Kettenglieder 2 mittels einer Bolzen-Buchse-Verbindung 3 bewerkstelligt ist. Zwischen beiden Kettengliedern 2 sind in Eingriff bringbare Mittel 7 zum Begrenzen des Schwenkwinkels der Kettenglieder entgegen einer Umlaufrichtung der Kette 1 vorgesehen. Die Auflageabschnitte 11 der Winkelhalter 6 weisen bezogen auf die Umlaufrichtung der Kette 1 in Richtung einer Außenseite der Kette 1. Das rechte in der Figur 1 dargestellte Kettenglied 2 weist Außenlaschen 5 auf, an deren in Haupterstreckungsrichtung äußeren Enden gegenüberliegend Gegenanschläge bzw. Aussparungen 14 ausgebildet sind, welche jeweils waagerecht bzw. in Haupterstreckungsrichtung verlaufende Rastkanten aufweisen, deren Flächen nach unten bzw. von Auflageabschnitten 11 der Winkelhalter 6 wegweisen. Das linke in Figur 1 dargestellte Kettenglied 2 weist Innenlaschen 4 auf, deren Enden von den äußeren Enden der Außenlaschen 5 umgriffen werden, wobei die Innenlaschen 4 und die Außenlaschen 5 fluchtende Bohrungen aufweisen, über welche beide Kettenglieder 2 mittels der Bolzen-Buchse-Verbindung 3 aneinander gekoppelt sind. Auf Außenflächen 8 der Innenlaschen 4 sind jeweils Winkelhalter 6 befestigt, wobei ein Befestigungsabschnitt 10 des Winkelhalters 6 flächig an der Außenfläche 8 anliegt und über Befestigungselemente 12 an dieser befestigt ist. Der Auflageabschnitt 11 erstreckt sich senkrecht zur Bildebene vom Befestigungsabschnitt 10 weg, so dass diese in einem in etwa rechten Winkel zueinander stehen. Der Befestigungsabschnitt 10 ist T-förmig ausgebildet und weist zwei gegenüberliegende, sich in Haupterstreckungsrichtung X vom Befestigungsabschnitt wegerstreckende Vorsprünge 13 auf. Die Vorsprünge weisen jeweils waagerechte bzw. in Haupterstreckungsrichtung X verlaufende Rastkanten auf, deren Flächen nach oben bzw. in Richtung der Auflageabschnitte 11 der Winkelhalter 6 weisen. In der in Figur 1 dargestellten Ausrichtung der Kettenglieder 2 zueinander sind die Aussparung 14 der Außenlasche 5 und der Vorsprung 13 des Winkelhalters 6 in Berührkontakt miteinander, so dass ein Verschwenken beider Kettenglieder 2 über diese Ausrichtung hinaus unterbunden wird und die Auflageabschnitte 11 parallel zueinander ausgerichtet sind. Die Außenlaschen 5 weisen ebenfalls Winkelhalter 6 auf, die in gleicher Weise wie die Winkelhalter 6 der Innenlaschen 4 mittels Befestigungselementen 12 an Außenflächen 9 der Außenlaschen 5 befestigt sind. Allerdings weisen die Winkelhalter 6 der Außenlaschen 5 keine Vorsprünge 13 auf.

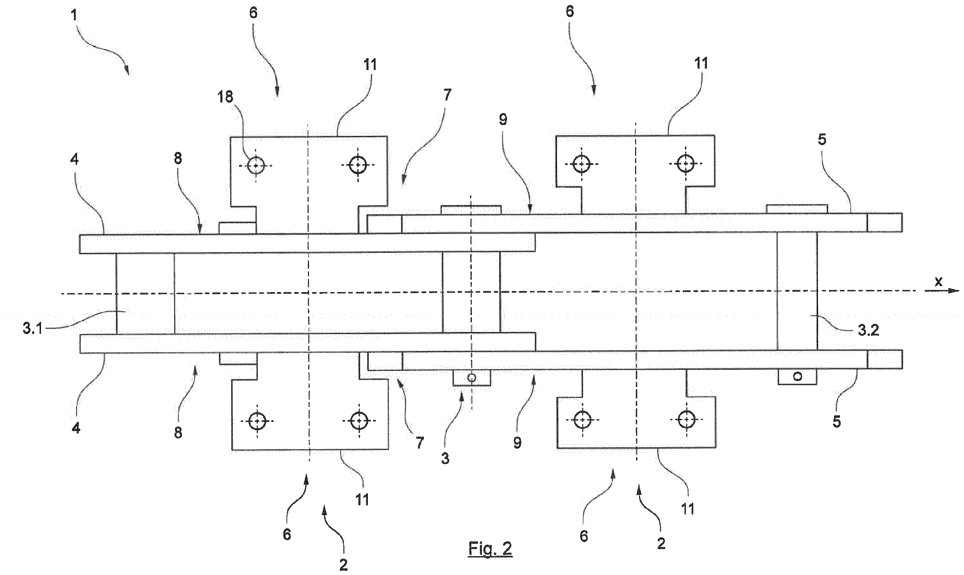

Figur 2 zeigt die miteinander verbunden Kettenglieder 2 der Figur 1 in einer Draufsicht. Es ist zu erkennen, dass die beiden Innenlaschen 4 des linken Kettenglieds 2 über Hülsen bzw. Buchsen 3.1 parallel voneinander beabstandet sind. Es ist ferner zu erkennen, dass die beiden Außenlaschen 5 des rechten Kettenglieds 2 über Bolzen 3.2 parallel voneinander beabstandet sind. Der Abstand der Außenlaschen 5 zueinander ist so gewählt, dass die Außenlaschen 5 in einem Verbindungsbereich die Außenflächen 8 der Innenlaschen umgreifen und flächig an diesen anliegen. Zur Verbindung der Kettenglieder ist der Bolzen 3.2 durch die Buchse 3.1 hindurchgesteckt und gegenüberliegend vom Bolzenkopf mittels eines Sicherungsstifts gesichert. Ferner ist zu erkennen, dass die Auflageabschnitte 11 der Winkelhalter 6 an den Außenlaschen 5 und den Innenlaschen 4 unterschiedliche Abmessungen aufweisen, so dass deren Außenkanten in Haupterstreckungsrichtung X miteinander fluchten. Ebenfalls fluchten in Haupterstreckungsrichtung X die Befestigungsaufnahmen 18 der Winkelhalter 6 für Anschlusselemente wie Stahlzellen oder Becher oder Platten.

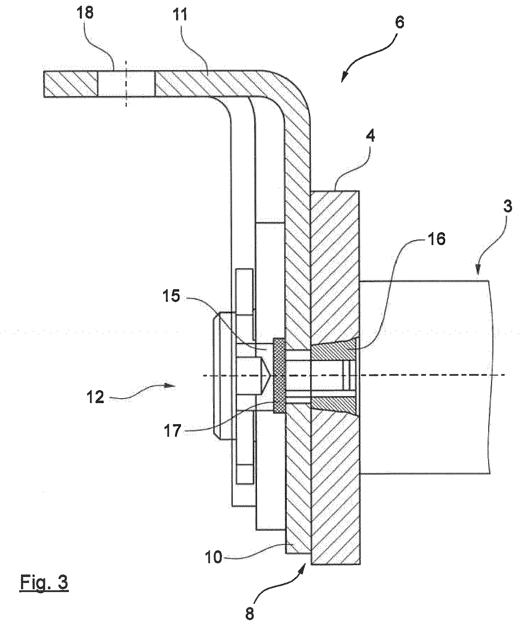

In Figur 3 ist eine Schnittansicht in einer Ebene quer zur Haupterstreckungsrichtung X dargestellt, in welcher die Anbindung der Winkelhalter 6 an die Laschen 4, 5 im Detail dargestellt ist. Der Befestigungsabschnitt 10 des Winkelhalters 6 steht in flächigem Kontakt mit der Außenfläche der Lasche 4, 5. Lasche 4, 5 und Befestigungsabschnitt 10 weisen fluchtende Bohrungen auf, über welche beide Elemente mittels Befestigungselementen 12 verbunden sind. Die Befestigungselemente 12 umfassen wie dargestellt Zylinderkopfschrauben 15, welche rückseitig mittels in den Laschen 4, 5 versenkten Konusmuttern 16 gekontert sind. Zur Sicherung der Verbindung sind Keilsicherungsscheiben 17 zwischen Schraube 15 und dem Winkelhalter 6 vorgesehen. Es ist zu erkennen, dass die dargestellte Verbindung zwischen einem Winkelhalter 6 und einer Innenlasche 4 besteht, wobei im Bildhintergrund ein an einer Außenlasche 5 befestigter Winkelhalter 6 zu sehen ist. Die Außenkanten beider hintereinander dargestellter Auflageabschnitte 11 der Winkelhalter 6 sowie deren Befestigungsaufnahmen 18 sind fluchtend zueinander angeordnet.

### Bezugszeichenliste

- 1: Buchsenförderkette
- 2: Kettenglied
- 3: Bolzen-Buchse-Verbindung
- 3.1: Buchse
- 3.2: Bolzen
- 4: Innenlaschen
- 5: Außenlaschen
- 6: Winkelhalter
- 7: Mittel zur Begrenzung des Schwenkwinkels
- 8: Außenfläche Innenlasche
- 9: Außenfläche Außenlasche
- 10: Befestigungsabschnitt
- 11: Auflageabschnitt
- 12: Befestigungselement
- 13: Vorsprung
- 14: Aussparung
- 15: Zylinderkopfschraube
- 16: Konusmutter
- 17: Keilsicherungsscheibe
- 18: Befestigungsaufnahmen
- X: Haupterstreckungsrichtung

## Patentansprüche

1. Förderkette (1), insbesondere Buchsenförderkette, für einen Förderer, mit einer Mehrzahl Kettenglieder (2), wobei benachbarte Kettenglieder (2) jeweils über eine Bolzen-Buchse-Verbindung (3) drehgelenkig miteinander verbunden sind, wobei die Kettenglieder (2) entlang einer Haupterstreckungsrichtung (X) der Förderkette (1) in abwechselnder Abfolge Innenlaschen (4) und Außenlaschen (5) aufweisen, wobei zumindest einige der Innenlaschen (4) Winkelhalter (6) zum Tragen von Anschlusselementen aufweisen, wobei zwischen zumindest zwei benachbarten Kettengliedern (2) der Förderkette (1) in Eingriff bringbare Mittel (7) vorgesehen sind, welche zur Begrenzung des Schwenkwinkels benachbarter Kettenglieder (2) entgegen der Umlaufrichtung der Förderkette (1) ausgebildet sind, wobei die Winkelhalter (6) auf Außenflächen (8) der Innenlaschen (4) befestigt sind und jeweils zumindest ein erstes der in Eingriff bringbaren Mittel (7) aufweisen,
**dadurch gekennzeichnet, dass** die Außenlaschen (5) jeweils zumindest ein zweites der in Eingriff bringbaren Mittel (7) aufweisen, wobei das zweite in Eingriff bringbare Mittel ein an der Außenlasche (5) ausgebildeter Gegenanschlag (14) ist.

2. Förderkette (1) nach Anspruch 1, wobei die Winkelhalter (6) einen parallel zur Außenfläche (8) der Lasche (4) verlaufenden Befestigungsabschnitt (10) sowie einen vom Befestigungsabschnitt (10) abgekanteten Auflageabschnitt (11) für die Montage der Anschlusselemente aufweisen, wobei das erste in Eingriff bringbare Mittel ein am Befestigungsabschnitt (10) ausgebildeter oder befestigter Anschlag (13) ist.

3. Förderkette (1) nach Anspruch 2, wobei der Anschlag (13) ein am Befestigungsabschnitt (10) des Winkelhalters (6) ausgebildeter Vorsprung (13) oder eine im Befestigungsabschnitt (10) des Winkelhalters ausgebildete Aussparung ist.

4. Förderkette (1) nach Anspruch 3, wobei der Befestigungsabschnitt (10) T-förmig ist und zwei sich gegenüberliegende, vom Befestigungsabschnitt (10) wegerstreckende Vorsprünge (13) als Anschläge aufweist.

5. Förderkette (1) nach einem der vorangehenden Ansprüche, wobei die Winkelhalter (6) kraftschlüssig mit den Laschen (4) verbunden sind.

6. Förderkette (1) nach Anspruch 5, wobei die Winkelhalter (6) jeweils mittels zumindest zwei voneinander beabstandeten Schraub-, Niet-, Kleb- oder Steckverbindungen (12) an den Laschen (4) befestigt sind.

7. Förderkette (1) nach einem der Ansprüche 5 oder 6, wobei die Winkelhalter (6) mittels einer Verbindung aus einer Schraube, insbesondere einer Zylinderkopfschraube (15), und einer Konusmutter (16) sowie insbesondere einer zwischen Schraube und Mutter angeordneten Keilsicherungsscheibe (17) an den Laschen (4) befestigt sind.

8. Förderkette (1) nach Anspruch 1, wobei der Gegenanschlag (14) als eine sich insbesondere in der Haupterstreckungsrichtung (X) der Förderkette (1) erstreckende Rastkante ausgebildet ist.

9. Förderkette (1) nach Anspruch 8, wobei die Außenlaschen (5) jeweils zwei sich in Haupterstreckungsrichtung (X) gegenüberliegende endseitig ausgebildete Rastkanten aufweisen.

10. Förderkette (1) nach einem der vorangehenden Ansprüche, wobei eine Mehrzahl aufeinanderfolgender Kettenglieder (2) der Förderkette (1) zwischen den einzelnen Kettengliedern (2) jeweils in Eingriff bringbare Mittel aufweist, wobei die in Eingriff bringbaren Mittel (2) die Schwenkwinkel zwischen den einzelnen Kettengliedern (2) entgegen der Umlaufrichtung der Förderkette (1) so begrenzen, dass die Winkelhalter (6) der Mehrzahl aufeinanderfolgender Kettenglieder (2) bei in Eingriff gebrachten Mitteln eine plane und/oder überbogene Oberfläche bereitstellen.

11. Förderkette (1) nach Anspruch 10, welche über ihren Verlauf regelmäßig voneinander beabstandete Laufrollen zur Führung der Förderkette (1) an einer Führung eines Stahlzellenförderers aufweist, wobei die Abstände jeweils eine Mehrzahl aufeinanderfolgender Kettenglieder (2) überspannen, wobei die an die Laufrollen angrenzenden Kettengliedverbindungen jeweils keine in Eingriff bringbaren Mittel (7) aufweisen.

12. Förderkette (1) nach einem der vorangehenden Ansprüche, wobei zumindest einige der Außenlaschen (5) Winkelhalter (6) zum Tragen von Anschlusselementen aufweisen, wobei die den Innenlaschen (4) zugeordneten Auflageabschnitte (11) und den Außenlaschen (5) zugeordneten Auflageabschnitte (11) jeweils Befestigungsaufnahmen (18) zum Befestigen von Anschlusselementen aufweisen, wobei die Befestigungsaufnahmen (18) der Winkelhalter (6) der Außenlaschen (5) und die Befestigungsaufnahmen (18) der Winkelhalter (6) der Innenlaschen (4) so zueinander ausgerichtet sind, dass sie in der Haupterstreckungsrichtung (X) der Förderkette (1) miteinander fluchten oder nicht miteinander fluchten.

13. Förderkette (1) nach Anspruch 12, wobei die Winkelhalter (6) der Außenlaschen (5) einen parallel zur Außenfläche (9) der Lasche (5) verlaufenden Befestigungsabschnitt (10) sowie einen vom Befestigungsabschnitt (10) abgekanteten Auflageabschnitt (11) für die Montage von Anschlusselementen aufweisen, wobei die Winkelhalter (6) kraftschlüssig an den Außenlaschen (5) befestigt sind.

## Claims

1. A conveyor chain (1), in particular a bush conveyor chain, for a conveyor, having a plurality of chain links (2), wherein adjacent chain links (2) are each connected to one another in a rotationally articulated manner via a bolt-bush connection (3), wherein the chain links (2) have inner link plates (4) and outer link plates (5) in an alternating sequence along a main direction of extent (X) of the conveyor chain (1), wherein at least some of the inner link plates (4) have angle holders (6) for carrying connection elements, wherein means (7) which can be brought into engagement are provided between at least two adjacent chain links (2) of the conveyor chain (1), which means are designed to limit the pivoting angle of adjacent chain links (2) counter to the direction of rotation of the conveyor chain (1), wherein the angle holders (6) are fastened to outer surfaces (8) of the inner link plates (4) and each have at least a first of the means (7) which can be brought into engagement,
**characterized in that** the outer link plates (5) each have at least one second of the means (7) which can be brought into engagement, wherein the second means which can be brought into engagement is a counter-stop (14) formed on the outer link plate (5).

2. The conveyor chain (1) according to claim 1, wherein the angle holders (6) have a fastening section (10) running parallel to the outer surface (8) of the link plate (4) and a bearing section (11) beveled from the fastening section (10) for the mounting of the connection elements, wherein the first means which can be brought into engagement is a stop (13) formed or fastened on the fastening section (10).

3. The conveyor chain (1) according to claim 2, wherein the stop (13) is a projection (13) formed on the fastening section (10) of the angle holder (6) or a cutout formed in the fastening section (10) of the angle holder.

4. The conveyor chain (1) according to claim 3, wherein the fastening section (10) is of T-shaped form and has two opposite projections (13) which extend away from the fastening section (10) as stops.

5. The conveyor chain (1) according to one of the preceding claims, wherein the angle holders (6) are connected to the link plates (4) in a force-fitting manner.

6. The conveyor chain (1) according to claim 5, wherein the angle holders (6) are each fastened to the link plates (4) by means of at least two screw, rivet, adhesive or plug-in connections (12) which are spaced apart from one another.

7. The conveyor chain (1) according to either claim 5 or claim 6, wherein the angle holders (6) are fastened to the link plates (4) by means of a connection comprising a screw, in particular a cylinder head screw (15), and a conical nut (16) and also in particular a wedge securing washer (17) arranged between the screw and the nut.

8. The conveyor chain (1) according to claim 1, wherein the counter-stop (14) is formed as a latching edge which extends in particular in the main direction of extent (X) of the conveyor chain (1).

9. The conveyor chain (1) according to claim 8, wherein the outer link plates (5) each have two latching edges which are formed at opposite ends in the main direction of extent (X).

10. The conveyor chain (1) according to one of the preceding claims, wherein a plurality of successive chain links (2) of the conveyor chain (1) each have means which can be brought into engagement between the individual chain links (2), wherein the means (2) which can be brought into engagement limit the pivoting angle between the individual chain links (2) counter to the direction of rotation of the conveyor chain (1) such that the angle holders (6) of the plurality of successive chain links (2) provide a planar and/or bent-over surface when said means are brought into engagement.

11. The conveyor chain (1) according to claim 10, which has rollers which are regularly spaced apart from one another over its course for guiding the conveyor chain (1) on a guide of a steel cell conveyor, wherein the spacings each span a plurality of successive chain links (2), wherein the chain link connections adjoining the rollers each have no means (7) which can be brought into engagement.

12. The conveyor chain (1) according to one of the preceding claims, wherein at least some of the outer link plates (5) have angle holders (6) for carrying connection elements, wherein the bearing sections (11) assigned to the inner link plates (4) and the bearing sections (11) assigned to the outer link plates (5) each have fastening receptacles (18) for fastening connection elements, wherein the fastening receptacles (18) of the angle holders (6) of the outer link plates (5) and the fastening receptacles (18) of the angle holders (6) of the inner link plates (4) are oriented with respect to one another such that they are aligned with one another or are not aligned with one another in the main direction of extent (X) of the conveyor chain (1).

13. The conveyor chain (1) according to claim 12, wherein the angle holders (6) of the outer link plates (5) have a fastening section (10) running parallel to the outer surface (9) of the link plate (5) and a bearing section (11) beveled from the fastening section (10) for the mounting of connection elements, wherein the angle holders (6) are fastened to the outer link plates (5) in a force-fitting manner.

## Revendications

1. Chaîne de convoyage (1), plus particulièrement chaîne de convoyage à douille, pour un convoyeur, avec une pluralité de maillons de chaîne (2), dans laquelle les maillons de chaîne (2) adjacents sont reliés entre eux respectivement par l'intermédiaire d'une liaison boulon-douille (3) avec une articulation rotative, dans laquelle les maillons de la chaîne (2) comprennent, le long d'une direction d'extension principale (X) de la chaîne de convoyage (1), de manière alternée, des pattes internes (4) et des pattes externes (5), dans laquelle au moins certaines des pattes internes (4) comprennent des supports angulaires (6) pour le support des éléments de raccordement, dans laquelle, entre au moins deux maillons de chaîne (2) adjacents de la chaîne de convoyage (1), sont prévus des moyens (7) pouvant être emboîtés, qui sont conçus pour limiter l'angle de pivotement des maillons de chaîne (2) adjacents à l'encontre de la direction de circulation de la chaîne de convoyage (1), dans laquelle les supports angulaires (6) sont fixés sur des surfaces externes (8) des pattes internes (4) et comprennent chacun un premier des moyens (7) pouvant être emboîtés,
**caractérisée en ce que** les pattes internes (5) comprennent chacune au moins un deuxième des moyens (7) pouvant être emboîtés, dans laquelle le deuxième moyen pouvant être emboîté est une contre-butée (14) réalisée sur la patte externe (5).

2. Chaîne de convoyage (1) selon la revendication 1, dans laquelle les supports angulaires (6) comprennent une portion de fixation (10) s'étendant parallèlement à la surface externe (8) de la patte (4) ainsi qu'une portion d'appui (11) pliée à partir de la portion de fixation (10) pour le montage des éléments de raccordement, dans laquelle le premier moyen pouvant être emboîté est une butée (13) réalisée ou fixée sur la portion de fixation (10).

3. Chaîne de convoyage (1) selon la revendication 2, dans laquelle la butée (13) est une saillie (13) réalisée sur la portion de fixation (10) du support angulaire (6) ou un évidement réalisé dans la portion de fixation (10) du support angulaire.

4. Chaîne de convoyage (1) selon la revendication 3, dans laquelle la portion de fixation (10) présente une forme de T et, en tant que butées, deux saillies (13) qui se font face et qui s'éloignent de la portion de fixation (10).

5. Chaîne de convoyage (1) selon l'une des revendications précédentes, dans laquelle les supports angulaires (6) sont reliés par force avec les pattes (4).

6. Chaîne de convoyage (1) selon la revendication 5, dans laquelle les supports angulaires (6) sont fixés chacun aux pattes (4) au moyen d'au moins deux liaisons vissées, rivetées, collées ou enfichés (12).

7. Chaîne de convoyage (1) selon l'une des revendications 5 ou 6, dans laquelle les supports angulaires (6) sont fixés aux pattes (4) au moyen d'une liaison constituée d'une vis, plus particulièrement d'une vis à tête cylindrique (15) et d'un écrou conique (16) ainsi que, plus particulièrement une rondelle Nord-Lock (17) disposée entre la vis et l'écrou.

8. Chaîne de convoyage (1) selon la revendication 1, dans laquelle la contre-butée (14) est conçue comme une arête d'encliquetage s'étendant dans la direction d'extension principale (X) de la chaîne de convoyage (1).

9. Chaîne de convoyage (1) selon la revendication 8, dans laquelle les pattes externes (5) comprennent chacune deux arêtes d'encliquetage opposées réalisés côté extrémité dans la direction d'extension principale (X).

10. Chaîne de convoyage (1) selon l'une des revendications précédentes, dans laquelle une pluralité de maillons de chaîne (2) successifs de la chaîne de convoyage (1) comprennent des moyens pouvant être emboîtés, dans laquelle les moyens pouvant être emboîtés (2) limitent les angles de pivotement entre les différents maillons de la chaîne (2) à l'encontre de la direction de circulation de la chaîne de convoyage (1), de sorte que les supports angulaires (6) de la pluralité de maillons de chaîne (2) successifs mettent à la disposition des moyens pouvant être emboîtés une surface plane et/ou incurvée.

11. Chaîne de convoyage (1) selon la revendication 10, qui présente, sur son extension, des galets régulièrement distants entre eux pour le guidage de la chaîne de convoyage (1) sur un guidage d'un convoyeur à cellules d'acier, dans laquelle les distances enjambent une pluralité de maillons de chaîne (2) successifs, dans laquelle les liaisons des maillons de chaîne adjacentes aux galets ne présentent respectivement aucun moyen pouvant être emboîté (7).

12. Chaîne de convoyage (1) selon l'une des revendications précédentes, dans laquelle au moins certaines de pattes externes (5) comprennent des supports angulaires (6) pour le support d'éléments de raccordement, dans laquelle les portions d'appui (11) correspondant aux pattes internes (4) et les portions d'appui (11) correspondant aux pattes externes (5) présentent respectivement des logements de fixation (18) pour la fixation d'éléments de raccordement, dans laquelle les logements de fixation (18) des supports angulaire (6) des pattes externes (5) et les logements de fixation (18) des supports angulaires (6) des pattes internes (4) sont orientés les uns par rapport aux autres de façon à être alignés entre eux ou non dans la direction d'extension principale (X) de la chaîne de convoyage (1).

13. Chaîne de convoyage (1) selon la revendication 12, dans laquelle les supports angulaires (6) des pattes externes (5) présentent une portion de fixation (10) s'étendant parallèlement à la surface externe (9) de la patte (5) ainsi qu'une portion d'appui (11) pliée à partir de la portion de fixation (10) pour le montage d'éléments de raccordement, dans laquelle les supports angulaires (6) sont fixés par force aux pattes externes (5).
